# EUROPEAN PATENT APPLICATION

(11) **EP 4 832 121 A2**
(43) Date of publication of application: **28.10.2026**
(21) Application number: 26166365.2
(22) Date of filing: 20.03.2026
(51) Int. Cl.: H01M 4/92, B22F 1/18, B22F 1/054, B22F 9/30, H01M 4/90

(54) **HIGH DENSITY LOADING MULTIMETALLIC PARTICLES ON CHEMICALLY MODIFIED CARBON SUPPORT**

(30) Priority: 31.03.2025 US 202519096363
(71) Applicant: Honda Motor Co., Ltd., Toyko 105-8404 (JP)
(72) Inventor: WU, Haibin, Raymond, 43067 (US); CHEN, Shutang, Raymond, 43067 (US); CHEN, Gugang, Raymond, 43067 (US)
(74) Representative: Kiwit, Benedikt

(57) **Abstract**

Described are methods for preparing multimetallic particles on a support including combining two or more metallic precursors in a solvent with a support to form a suspension, the two or more metallic precursors including a first metallic precursor and a second metallic precursor, and the support including a modified carbon, and heating the suspension to provide supported multimetallic particles having multimetallic particles bound to the support. Also described are supported multimetallic particles having a multimetallic particle bound to a support, the multimetallic particle having a first metallic element and a second metallic element, and the support having a modified carbon.

## Description

This application is based on and claims the benefit of priority from U.S. Patent Application No. 19/096,363, filed on March 31,2025.

### TECHNICAL FIELD

The present disclosure is directed to supported multimetallic particles.

### BACKGROUND

Multimetallic materials have been shown to exhibit significant lattice strain and exceptional corrosion resistance, which makes them attractive candidates for use in energy conversion and storage applications, such as fuel cell catalysts. However, current attempts to deposit such catalysts onto a support have been ineffective and obstruct the elevated loading density, which limit their catalytic effectiveness and longevity.

### SUMMARY

Disclosed herein is a method for preparing multimetallic particles on a support. The method may include combining two or more metallic precursors in a solvent with a support to form a suspension, and heating the suspension to provide multimetallic particles on the support. According to some aspects, the support may include carbon particles. The present disclosure is also directed to supported multimetallic particles as described herein.

### BRIEF DESCRIPTION OF THE DRAWINGS

FIG. 1A shows the XRD pattern corresponding with the supported multimetallic nanoparticles of Example I(a).
FIG. 1B shows the XRD pattern corresponding with the supported multimetallic nanoparticles of Example I(b).
FIG. 1C shows the XRD pattern corresponding with the supported multimetallic nanoparticles of Example I(c).
FIG. 2A shows TEM images of the supported multimetallic nanoparticles of Example I(a).
FIG. 2B shows TEM images of the supported multimetallic nanoparticles of Example I(b).
FIG. 2C shows TEM images of the supported multimetallic nanoparticles of Example I(c).
FIG. 2D shows TEM images of the supported multimetallic nanoparticles of Example II.
FIG. 3A shows the EDA spectrum of the supported multimetallic nanoparticles of Example I(a).
FIG. 3B shows the EDA spectrum of the supported multimetallic nanoparticles of Example I(b).
FIG. 3C shows the EDA spectrum of the supported multimetallic nanoparticles of Example I(c).
FIG. 4A show the ORR polarization curves for the supported multimetallic nanoparticles of Example I(a).
FIG. 4B show the ORR polarization curves for the supported multimetallic nanoparticles of Example I(b).
FIG. 4C show the ORR polarization curves for the supported multimetallic nanoparticles of Example I(c).
FIG. 5 shows the specific area activity of the multimetallic nanoparticles supported on various modified carbons.

### DETAILED DESCRIPTION

Disclosed herein is a method for preparing multimetallic particles on a support. The method may include combining two or more metallic precursors in a solvent with a support to form a suspension, and heating the suspension to provide multimetallic particles on the support. According to some aspects, the support may include carbon particles. The present disclosure is also directed to supported multimetallic particles prepared by the method disclosed herein.

As used herein, a "multimetallic particle" is a particle containing two or more different metallic elements. In some non-limiting examples, the multimetallic particle may include a high entropy alloy, or an "HEA." As used herein, the term "high entropy alloy" or "HEA" refers generally to an alloy having two or more metallic elements with a mixing entropy of greater than 1.3R, wherein the entropy of mixing is determined using the equation ΔSmix = RlnN, wherein R is the gas constant and N is the total number of elements.

According to some aspects, each of the two or more different metallic elements contained by the multimetallic particles may independently be Pt, Ru, Co, Fe, Ni, Ir, Y, Cu, Rh, and Ag. According to some aspects, the multimetallic particles may include two, three, four, five, six, or more different metallic elements as described herein. According to some aspects, the multimetallic particles may include an alloyed crystalline phase, that is, a single phase formed from an alloy of the two or more different metallic elements in which the atoms of the alloy are arranged in a substantially regular pattern.

In some non-limiting examples, the multimetallic particles may include Pt, Ru, Co, Fe, and Ni. In some non-limiting examples, the multimetallic particles may include Pt, Ru, Co, and Ni. In some non-limiting examples, the multimetallic particles may include Ir, Ru, Co, Fe, and Ni. In some non-limiting examples, the multimetallic particles may include Ir, Ru, Co, and Ni. In some non-limiting examples, the multimetallic particles may include Ag, Ru, Co, Fe, and Ni. In some non-limiting examples, the multimetallic particles may include Ag, Ru, Co, and Ni.

According to some aspects, each of the two or more different metallic elements contained by the multimetallic particles may independently be present in the multimetallic particles in an amount between about 0.01 and 50 atomic %.

In some non-limiting examples, the multimetallic particle may include at least one metallic element in an amount of between about 0.1 and 10 atomic %, optionally between about 0.1 and 5 atomic %, and optionally between about 1 and 5 atomic %.

In some non-limiting examples, the multimetallic particle may include at least one metallic element in an amount of between about 5 and 25 atomic %, optionally between about 10 and 20 atomic %, optionally between about 10 and 15 atomic %, and optionally between about 15 and 20 atomic %.

In some non-limiting examples, the multimetallic particle may include at least one metallic element in an amount of between about 30 and 50 atomic %, optionally between about 35 and 45 atomic %, optionally between about 35 and 40 atomic %, and optionally between about 40 and 45 atomic %.

Optionally, the relative amount of each metallic element may individually vary by no more than ± 50 atomic % with respect to at least one other metallic element contained by the multimetallic particles, optionally no more than ± 40 atomic %, optionally no more than ± 30 atomic %, optionally no more than ± 25 atomic %, optionally no more than ± 20 atomic %, and optionally no more than ± 15 atomic %.

According to some aspects, the multimetallic particles disclosed herein may include multimetallic nanoparticles. As used herein, the term "nanoparticles" refers to particles having at least one dimension on the nanoscale (i.e., at least one dimension between about 0.1 and 100 nm). In some non-limiting examples, a nanoparticles may include particles wherein each spatial dimension thereof is on the nanoscale.

The multimetallic particles of the present disclosure are provided on a support, thus providing supported multimetallic particles. According to some aspects, the supported multimetallic particles may include chemical bonding between the multimetallic particles and the support, such as ionic bonding, covalent bonding, metallic bonding, hydrogen bonding, or a combination thereof. The support may include particles (including, but not limited to, nanoparticles) of a support material. In some non-limiting examples, the support material includes carbon, such as carbon black.

According to some aspects, the carbon may include a modified carbon. As used herein, the term "modified carbon" refers to a carbon that has been modified to have one or more functional groups containing a non-carbon element. The non-carbon element may include, for example, O, S, N, or a combination thereof. In some non-limiting examples, the one or more functional groups may include an aromatic functional group. Example functional groups include, but are not limited to, phenol, thiophenol, aniline, amine, carboxylate, hydroxyl, thiol, and combinations thereof. According to some aspects, the support may include modified carbon black.

According to some aspects, the supported multimetallic particles may include a certain mass ratio of metallic elements to support material as disclosed herein. For example, in the case wherein the support includes a modified carbon black, the supported multimetallic particles may include a certain mass ratio of metallic elements to carbon. According to some aspects, the mass ratio may be between about 1:1 and 100:1, optionally between about 1:1 and 60:1, optionally between about 1:1 and 50:1, optionally between about 1:1 and 40:1, optionally between about 1:1 and 30:1, optionally between about 1:1 and 20:1, and optionally about 10:1. According to some aspects, the mass ratio may be at least about 1:1, optionally at least about 5:1, optionally at least about 10:1, optionally at least about 15:1, optionally at least about 20:1, optionally at least about 25:1, optionally at least about 30:1, optionally at least about 35:1, optionally at least about 40:1, optionally at least about 45:1, optionally at least about 50:1, optionally at least about 55:1, and optionally at least about 60:1.

Disclosed herein is a method for preparing multimetallic particles on a support as described herein. The method may include combining two or more metallic precursors in a solvent with a support to form a suspension, and heating the suspension to provide multimetallic particles on the support.

The metallic precursors may each include a metallic element as described herein. According to some aspects, each metallic precursor may include a compound having a metallic element. In some non-limiting examples, the compound may be an organic salt of a metal, such as a metal acetylacetonate, a metal acetate, a metal stearate, or a combination thereof.

The solvent may include a glycol. In some non-limiting examples, the glycol may have a boiling point of at least about 200°C. Non-limiting examples of glycols useful according to the present disclosure include ethylene glycol, tetraethylene glycol, hexaethylene glycol, glycerin, pentaethylene glycol, and combinations thereof.

The method may include independently combining the two or more metallic precursors with the solvent simultaneously or sequentially with at least one other of the two or more metallic precursors. According to some aspects, the method may include dispersing the two or more metallic precursors in the solvent by agitation for a certain time period. It should be understood that as used herein, "agitation" may include sonicating, mixing, stirring, shaking, and/or the like. In some non-limiting examples, the time period may be between about 1 minute and 1 hour, optionally between about 1 and 30 minutes, optionally between about 1 and 20 minutes, and optionally about 10 minutes.

The method may include combining the two or more metallic precursors in the solvent with a support as disclosed herein. According to some aspects, the support may be provided as a support suspension. For example, the method may include providing a support as disclosed herein with a solvent and agitating for a certain time period to provide the support suspension. The solvent may be the same as or different from the solvent combined with the two or more metallic precursors as described herein. According to some aspects, the time period may be between about 1 minute and 1 hour, optionally between about 15 and 45 minutes, and optionally about 30 minutes.

According to some aspects, the two or more metallic precursors in the solvent may be combined with the support and/or support suspension gradually over a certain time period to provide a suspension. In some non-limiting examples, the time period may be at least 1 minute, optionally at least 10 minutes, and optionally at least about 20 minutes. The two or more metallic precursors, solvent, and support and/or support suspension may be agitated for some or all of the time period.

The method may further include heating the suspension to a certain elevated temperature for a certain time period sufficient to provide supported multimetallic particles as disclosed herein. According to some aspects, heating may be performed in a reduced pressure environment, such as an autoclave. As used herein, a "reduced pressure environment" refers to an environment wherein the pressure is less than the average atmospheric pressure at sea level on Earth.

According to some aspects, the certain elevated temperature may be between about 100 and 260 °C, optionally between 100 and 250 °C, optionally between about 110 and 230 °C, and optionally between about 120 and 220 °C. According to some aspects, the certain elevated temperature may be less than about 250 °C, optionally less than about 230 °C, and optionally less than about 220 °C. According to some aspects, the certain time period may be between about 1 and 54 hours, optionally between about 6 and 48 hours.

According to some aspects, heating may be performed via a furnace. According to some aspects, the heating may be performed without microwave heating. Additionally or alternatively, heating may be performed without ultrasonic heating. However, the disclosure is not necessarily limited in this way, as heating may be additionally or alternatively performed with microwave heating, with ultrasonic heating, or with a combination thereof.

The method may further include a certain cooling period wherein heating is ceased and the suspension is allowed to cool to about room temperature, that is, between about 20 and 22 °C. The cooling period may be at least 1 hour, optionally at least 2 hours, optionally at least 3 hours, optionally at least 4 hours, optionally at least 5 hours, and optionally at least 6 hours.

The method may further include one or more washing processes sufficient to separate the supported multimetallic particles from unreacted precursors, solvent, and/or other byproducts. In some non-limiting example, each washing process may independently include one or more of decanting the supernatant, adding one or more solvents, and/or sonicating. According to some aspects, the solvent may include isopropanol, methanol, ethanol, acetone, water, or combination thereof. Each washing process may independently further include centrifuging and discarding the resultant supernatant. According to some aspects, the synthesis process may include one, two, three, or more washing processes. The method may further include drying the resulting supported multimetallic particles.

The supported multimetallic particles of the present disclosure may be useful in fuel cell applications, such as catalysts for fuel cells. Thus, the present disclosure is further directed to fuel cells containing the supported multimetallic particles as described herein. In some non-limiting examples, a fuel cell may include an anode including an anode material and a cathode including a cathode material, wherein at least one of the anode material and the cathode material includes the supported multimetallic particles described herein. The fuel cell may further include an electrolyte. In some non-limiting examples, the electrolyte may include an acidic electrolyte, such as in a photoelectrochemical cell.

While the aspects described herein have been described in conjunction with the example aspects outlined above, various alternatives, modifications, variations, improvements, and/or substantial equivalents, whether known or that are or may be presently unforeseen, may become apparent to those having at least ordinary skill in the art. Accordingly, the example aspects, as set forth above, are intended to be illustrative, not limiting. Various changes may be made without departing from the spirit and scope of the disclosure. Therefore, the disclosure is intended to embrace all known or later-developed alternatives, modifications, variations, improvements, and/or substantial equivalents.

Thus, the claims are not intended to be limited to the aspects shown herein, but are to be accorded the full scope consistent with the language of the claims, wherein reference to an element in the singular is not intended to mean "one and only one" unless specifically so stated, but rather "one or more." All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed as a means plus function unless the element is expressly recited using the phrase "means for."

Herein, the recitation of numerical ranges by endpoints (e.g. between about 50:1 and 1:1, between about 100 and 500 °C, between about 1 minute and 60 minutes) include all numbers subsumed within that range, for example, between about 1 minute and 60 minutes includes 21, 22, 23, and 24 minutes as endpoints within the specified range. Thus, for example, ranges 22-36, 25-32, 23-29, etc. are also ranges with endpoints subsumed within the range 1-60 depending on the starting materials used, temperature, specific applications, specific embodiments, or limitations of the claims if needed. The Examples and methods disclosed herein demonstrate the recited ranges subsume every point within the ranges because different synthetic products result from changing one or more reaction parameters. Further, the methods and Examples disclosed herein describe various aspects of the disclosed ranges and the effects if the ranges are changed individually or in combination with other recited ranges.

Further, the word "example" is used herein to mean "serving as an example, instance, or illustration." Any aspect described herein as "example" is not necessarily to be construed as preferred or advantageous over other aspects. Unless specifically stated otherwise, the term "some" refers to one or more. Combinations such as "at least one of A, B, or C," "at least one of A, B, and C," and "A, B, C, or any combination thereof" include any combination of A, B, and/or C, and may include multiples of A, multiples of B, or multiples of C. Specifically, combinations such as "at least one of A, B, or C," "at least one of A, B, and C," and "A, B, C, or any combination thereof" may be A only, B only, C only, A and B, A and C, B and C, or A and B and C, where any such combinations may contain one or more member or members of A, B, or C. Nothing disclosed herein is intended to be dedicated to the public regardless of whether such disclosure is explicitly recited in the claims.

As used herein, the term "about" and "approximately" are defined to being close to as understood by one of ordinary skill in the art. In one non-limiting embodiment, the term "about" and "approximately" are defined to be within 10%, preferably within 5%, more preferably within 1%, and most preferably within 0.5%.

The examples are put forth so as to provide those of ordinary skill in the art with a complete disclosure and description of how to make and use the present invention, and are not intended to limit the scope of what the inventors regard as their invention nor are they intended to represent that the experiments below are all or the only experiments performed. Efforts have been made to ensure accuracy with respect to numbers used (e.g. amounts, dimensions, etc.) but some experimental errors and deviations.

### EXAMPLES

### EXAMPLE I(a): Direct Synthesis of PtNiCoRu alloy nanoparticles on thiophenol modified XC-72 carbon black

First, 40 mg of each of Pt(acac)₂, Ru(acac)₃, Co(acac)₃, Ni(acac)₂, and Fe(acac)₃ were sonicated for 10 minutes in 8 mL of ethylene glycol. Then, a support suspension was prepared by dispersing 20 mg of thiophenol-modified Vulcan XC-72 carbon black in 10 mL of ethylene glycol (EG) for 30 minutes to form a uniform carbon-EG suspension due to the high viscosity of the solvent. Then, 2 mL of the support suspension was gradually added into the precursor mixture with vigorous stirring for at least 20 minutes. The well mixed black suspension containing all precursors and carbon black was then transferred to a 100 mL autoclave in the oven. The whole reactor was heated to the designed temperature (between about 120 °C and 220 °C) and kept at the temperature for certain time (between about 6 and 48 hours). Following to the reaction step, the reactor was cooled down to room temperature (about 20 °C) over a period of about 6 hours. To remove the excessive unreacted precursors, solvent, and other byproducts, the supernatant was decanted, and 25 mL of isopropanol was filled. The products were sonicated for 30 minutes in isopropanol for removing the adsorbed solvent molecules. The carbon products were then separated by centrifuging at 8000 rpm for 20 minutes. Another 20 minutes centrifuging was employed at 8000 rpm as needed. The black sediment was washed by adding isopropanol or water with sonication for 30 minutes. The sediment was centrifuged at 7000 rpm for 15 minutes. The washing procedure was repeated two more times. The precipitate from the suspension was then dried in a vacuum desiccator prior to further characterization and application.

### EXAMPLE I(b): Direct Synthesis of PtNiCoRuFe alloy nanoparticles on aniline modified XC-72 carbon black

First, 40 mg of each of Pt(acac)₂, Ru(acac)₃, Co(acac)₃, Ni(acac)₂, and Fe(acac)₃ were sonicated for 10 minutes in 8 mL of ethylene glycol. Then, a support suspension was prepared by dispersing 20 mg of aniline-modified Vulcan XC-72 carbon black in 10 mL of ethylene glycol (EG) for 30 minutes to form a uniform carbon-EG suspension due to the high viscosity of the solvent. Then, 2 mL of the support suspension was gradually added into the precursor mixture with vigorous stirring for at least 20 minutes. The well mixed black suspension containing all precursors and carbon black was then transferred to a 100 mL autoclave in the oven. The whole reactor was heated to the designed temperature (between about 120 °C and 220 °C) and kept at the temperature for certain time (between about 6 and 48 hours). Following to the reaction step, the reactor was cooled down to room temperature (about 20 °C) over a period of about 6 hours. To remove the excessive unreacted precursors, solvent, and other byproducts, the supernatant was decanted, and 25 mL of isopropanol was filled. The products were sonicated for 30 minutes in isopropanol for removing the adsorbed solvent molecules. The carbon products were then separated by centrifuging at 8000 rpm for 20 minutes. Another 20 minutes centrifuging was employed at 8000 rpm as needed. The black sediment was washed by adding isopropanol or water with sonication for 30 minutes. The sediment was centrifuged at 7000 rpm for 15 minutes. The washing procedure was repeated two more times. The precipitate from the suspension was then dried in a vacuum desiccator prior to further characterization and application.

### EXAMPLE I(c): Direct Synthesis of PtNiCoRu alloy nanoparticles on phenol modified XC-72 carbon black

First, 40 mg of each of? Pt(acac)₂, Ru(acac)₃, Co(acac)₃, Ni(acac)₂, and Fe(acac)₃ were sonicated for 10 minutes in 8 mL of ethylene glycol. Then, a support suspension was prepared by dispersing 20 mg of phenol-modified Vulcan XC-72 carbon black in 10 mL of ethylene glycol (EG) for 30 minutes to form a uniform carbon-EG suspension due to the high viscosity of the solvent. Then, 2 mL of the support suspension was gradually added into the precursor mixture with vigorous stirring for at least 20 minutes. The well mixed black suspension containing all precursors and carbon black was then transferred to a 100 mL autoclave in the oven. The whole reactor was heated to the designed temperature (between about 120 °C and 220 °C) and kept at the temperature for certain time (between about 6 and 48 hours). Following to the reaction step, the reactor was cooled down to room temperature (about 20 °C) over a period of about 6 hours. To remove the excessive unreacted precursors, solvent, and other byproducts, the supernatant was decanted, and 25 mL of isopropanol was filled. The products were sonicated for 30 minutes in isopropanol for removing the adsorbed solvent molecules. The carbon products were then separated by centrifuging at 8000 rpm for 20 minutes. Another 20 minutes centrifuging was employed at 8000 rpm as needed. The black sediment was washed by adding isopropanol or water with sonication for 30 minutes. The sediment was centrifuged at 7000 rpm for 15 minutes. The washing procedure was repeated two more times. The precipitate from the suspension was then dried in a vacuum desiccator prior to further characterization and application.

### EXAMPLE II: Direct Synthesis of PtNiCoRu alloy nanoparticles on unmodified XC-72 carbon black

First, 40 mg of each of Pt(acac)₂, Ru(acac)₃, Co(acac)₃, Ni(acac)₂, and Fe(acac)₃ were sonicated for 10 minutes in 8 mL of ethylene glycol. Then, a support suspension was prepared by dispersing 20 mg of unmodified Vulcan XC-72 carbon black in 10 mL of ethylene glycol (EG) for 30 minutes to form a uniform carbon-EG suspension due to the high viscosity of the solvent. Then, 2 mL of the support suspension was gradually added into the precursor mixture with vigorous stirring for at least 20 minutes. The well mixed black suspension containing all precursors and carbon black was then transferred to a 100 mL autoclave in the oven. The whole reactor was heated to the designed temperature (between about 120 °C and 220 °C) and kept at the temperature for certain time (between about 6 and 48 hours). Following to the reaction step, the reactor was cooled down to room temperature (about 20 °C) over a period of about 6 hours. To remove the excessive unreacted precursors, solvent, and other byproducts, the supernatant was decanted, and 25 mL of isopropanol was filled. The products were sonicated for 30 minutes in isopropanol for removing the adsorbed solvent molecules. The carbon products were then separated by centrifuging at 8000 rpm for 20 minutes. Another 20 minutes centrifuging was employed at 8000 rpm as needed. The black sediment was washed by adding isopropanol or water with sonication for 30 minutes. The sediment was centrifuged at 7000 rpm for 15 minutes. The washing procedure was repeated two more times. The precipitate from the suspension was then dried in a vacuum desiccator prior to further characterization and application.

### EXAMPLE III: XRD characterization of supported multimetallic nanoparticles

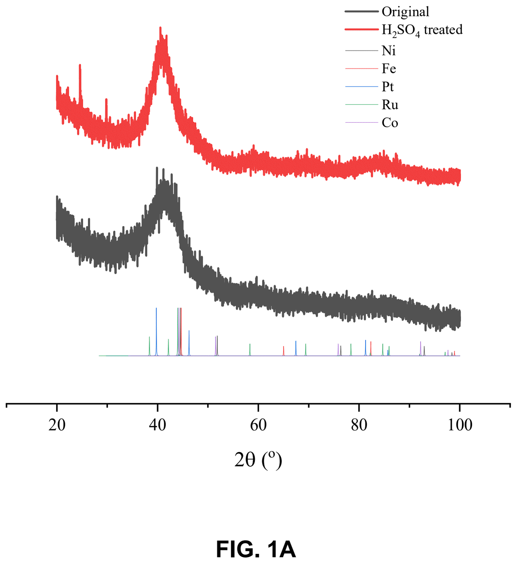

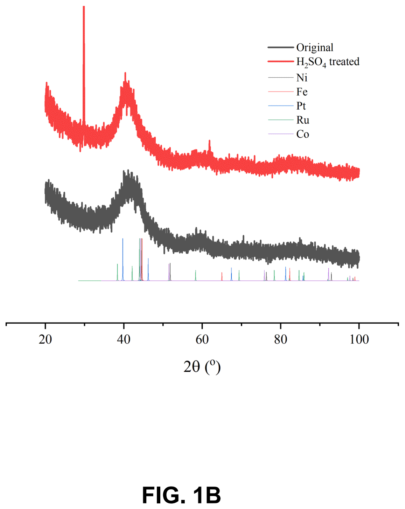

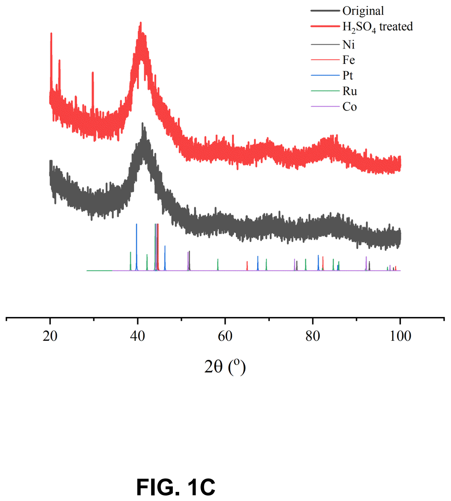

A Bruker D8 Advance X-ray diffractometer with Cu Kα radiation operated at a tube voltage of 40 kV and a current of 40 mA was used to obtain X-ray diffraction (XRD) patterns of the supported multimetallic nanoparticles prepared according to Examples I(a)-I(c). FIG. 1A shows the XRD pattern corresponding with the supported multimetallic nanoparticles of Example I(a). FIG. 1B shows the XRD pattern corresponding with the supported multimetallic nanoparticles of Example I(b). FIG. 1C shows the XRD pattern corresponding with the supported multimetallic nanoparticles of Example I(c). From these XRD patterns, it was concluded that the multimetallic nanoparticles included an alloyed crystalline phase rather than a mixture of individual metallic phases, indicating that they are good candidates for use in acidic electrolysis given their stability against acidic corrosion.

### EXAMPLE IV: TEM characterization of supported multimetallic nanoparticles

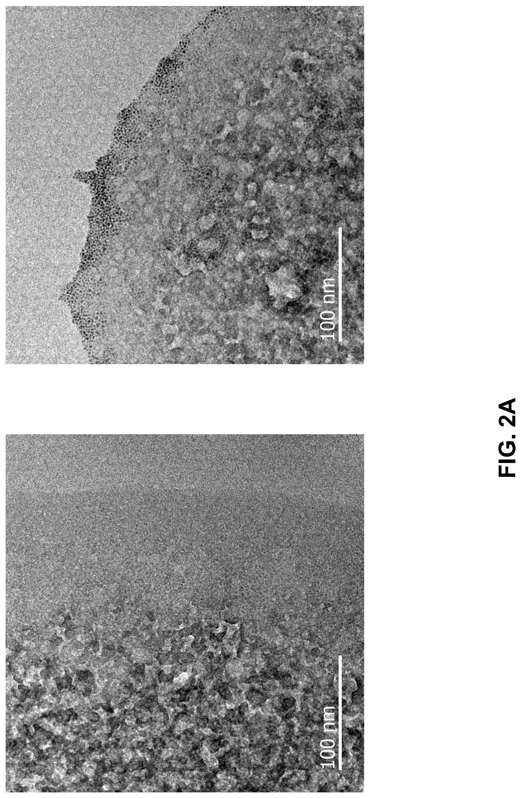

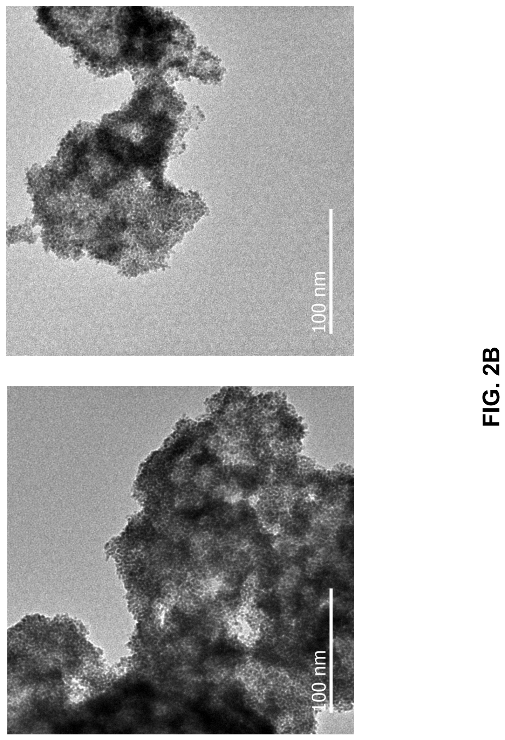

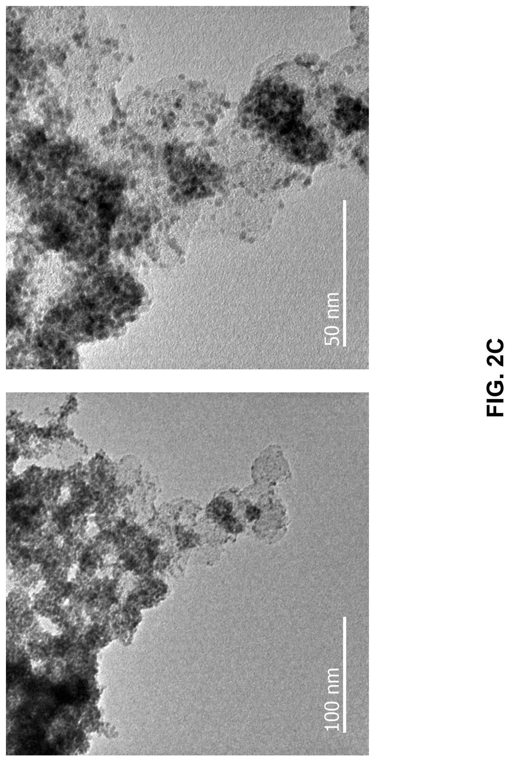

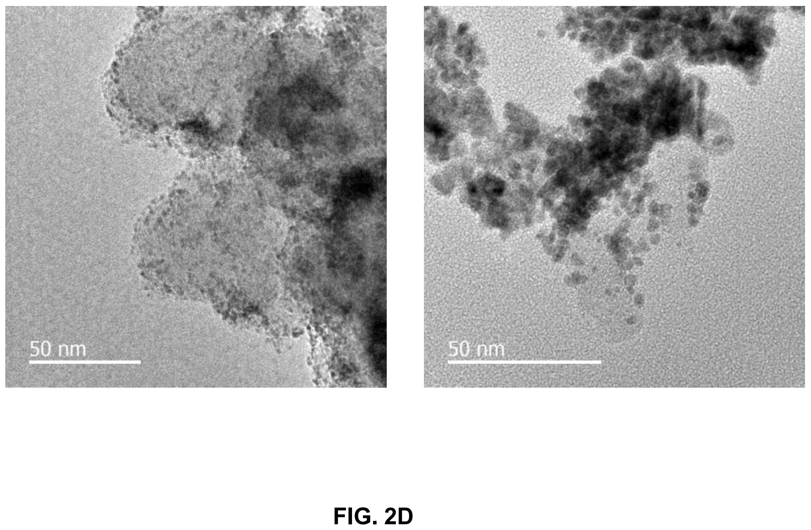

Transmission electron microscopy (TEM) images of the supported multimetallic nanoparticles prepared according to Examples I(a)-I(c) and II were captured using an FEI Tecnai 20 microscope with an accelerating voltage of 200 kV. FIG. 2A shows TEM images of the supported multimetallic nanoparticles of Example I(a). FIG. 2B shows TEM images of the supported multimetallic nanoparticles of Example I(b). FIG. 2C shows TEM images of the supported multimetallic nanoparticles of Example I(c). FIG. 2D shows TEM images of the supported multimetallic nanoparticles of Example II.

As shown in FIGS. 2A-2D, of the supported multimetallic nanoparticles of Examples I(a) and I(b) showed extremely high density loading of the multimetallic nanoparticles on the support. In addition, the supported multimetallic nanoparticles of Example I(c) showed higher density loading than the supported multimetallic nanoparticles of Example II.

### EXAMPLE V: EDS characterization of supported multimetallic nanoparticles

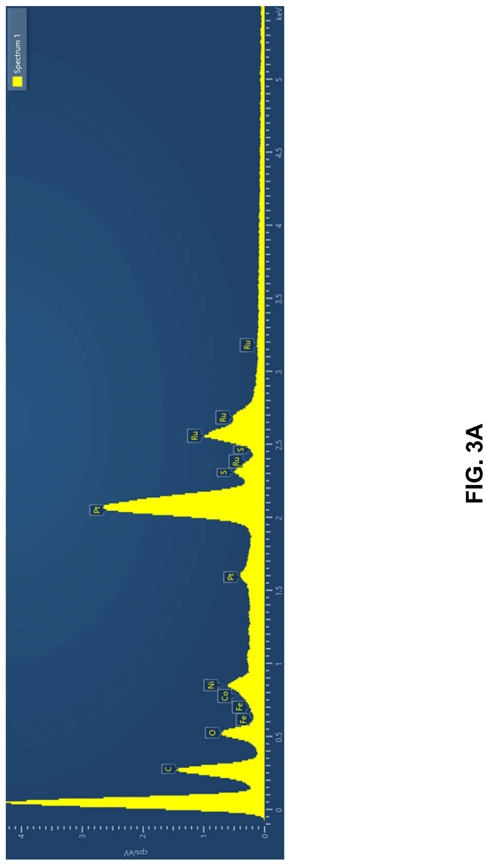

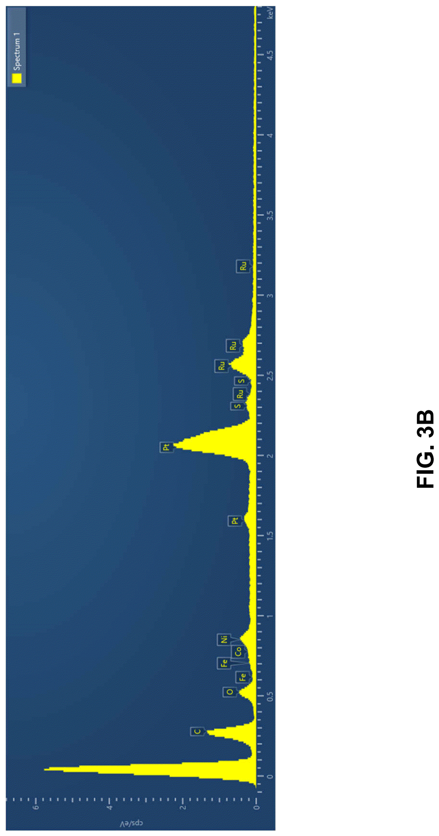

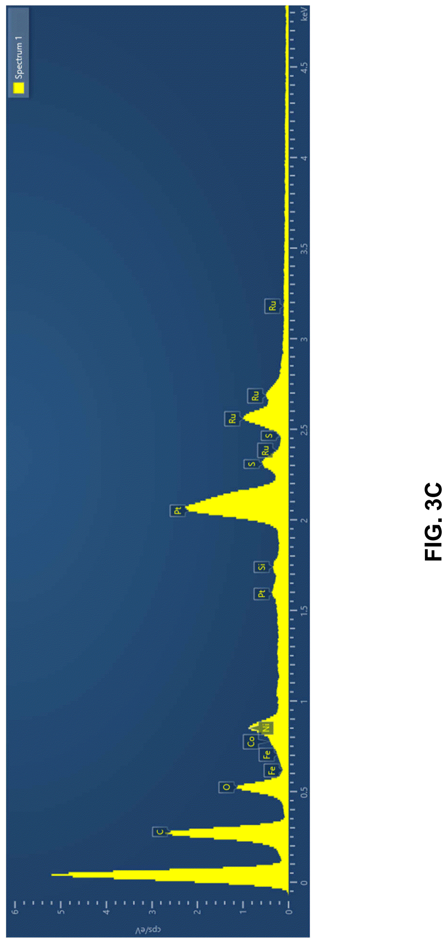

Energy Dispersive X-Ray spectra (EDS) of the supported multimetallic nanoparticles prepared according to Examples I(a)-I(c) were collected by FEI SEM. FIG. 3A shows the EDA spectrum of the supported multimetallic nanoparticles of Example I(a). FIG. 3B shows the EDA spectrum of the supported multimetallic nanoparticles of Example I(b). FIG. 3C shows the EDA spectrum of the supported multimetallic nanoparticles of Example I(c).

Based on these spectra, the composition of each the supported multimetallic nanoparticles prepared according to Examples I(a)-I(c) were determined as shown in Tables 1-3.

**Table 1: Supported multimetallic nanoparticles of Example I(a)**

| **Element** | **Atomic percentage (%)** |
|---|---|
| Fe | 0.636487 |
| Co | 3.775161 |
| Ni | 14.37664 |
| Ru | 39.49399 |
| Pt | 41.71772 |

**Table 2: Supported multimetallic nanoparticles of Example I(b)**

| **Element** | **Atomic percentage (%)** |
|---|---|
| Fe | 2.346418 |
| Co | 2.921189 |
| Ni | 12.90868 |
| Ru | 38.37441 |
| Pt | 43.4493 |

**Table 3: Supported multimetallic nanoparticles of Example I(c)**

| **Element** | **Atomic percentage (%)** |
|---|---|
| Fe | 0.660386 |
| Co | 5.12019 |
| Ni | 19.90402 |
| Ru | 40.03698 |
| Pt | 34.27842 |

### EXAMPLE VI: Electrochemical characterization of supported multimetallic nanoparticles

The majority of the electrochemical measurements were conducted on an electrochemical workstation at ambient temperature (25 °C), utilizing a three-electrode electrochemical configuration with a rotating disk electrode (RDE) device. A glassy carbon working electrode (GCE, 5 mm inner diameter, 0.196 cm²), a graphite rod counter electrode, and a KCl-saturated Ag/AgCl reference electrode were employed for all experiments. All potentials were referenced to a reversible hydrogen electrode (RHE). The potential at the zero current point was selected as the reaction potential of the hydrogen electrode. The potential at the zero current point was established as -0.258 V. Thus, the potential measured with an Ag/AgCl electrode can be expressed as E (RHE) = E (Ag/AgCl) + 0.258 V.

To conduct the measurements, first, electrodes were prepared by directly drop casting 10 µL of a solution containing the particles from each of Examples I(a)-I(c) on the glassy carbon electrodes. The cyclic voltammogram was then obtained to examine the ECSA. A cyclic voltammogram (CV) can easily reflect the surface structure change. Thus, CV was used to judge the surface structure reconstruction. The cyclic voltammetry scan was performed at a rate of 50 mV s-1 in an Ar-saturated 0.1 M HClO4 in the corresponding ranges ( 0 ~ 1.05 V, 0.025 ~ 1.1 V, and 0.025 ~ 1.3 V vs. RHE) at a scan rate of 50 mV s-1 in an Ar-saturated 0.1 M HClO4 solution. Two and a half cycles of CV were recorded to obtain reproducible cycles. It was determined that high-voltage oxidation (1.3 - 1.5 V) treatment can freshen the catalyst surfaces that become inert in long-term durability tests by forming new reactive crystalline facets.

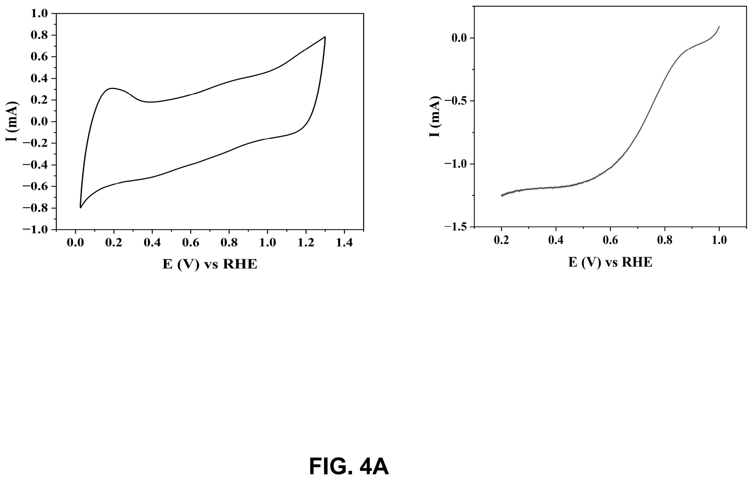

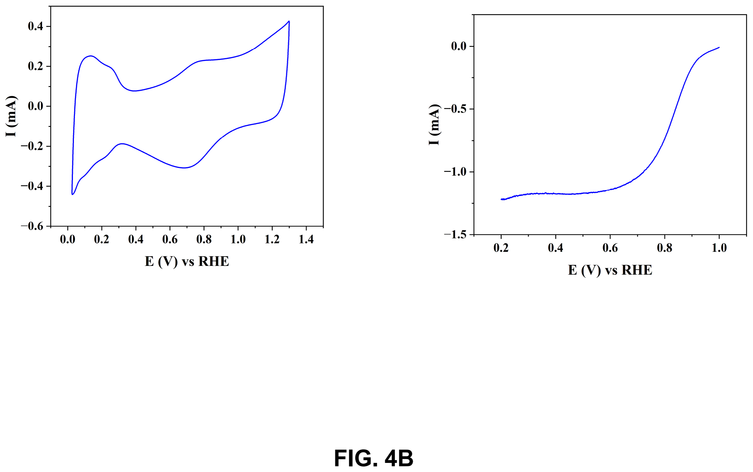

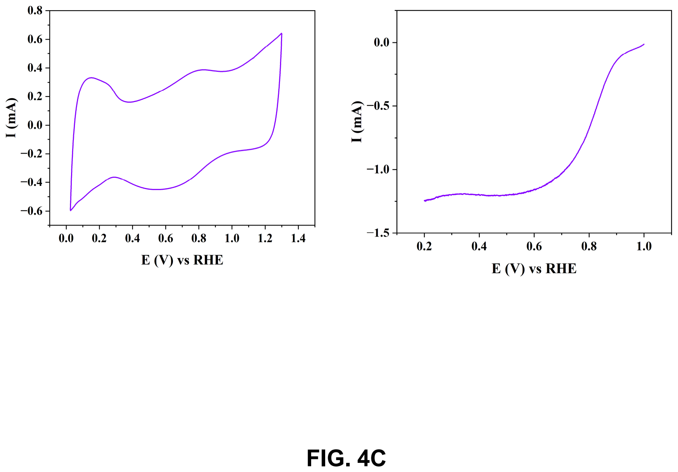

ORR polarization curves were mainly recorded in an O2-saturated 0.1 M HClO4 electrolyte at a rotation speed of 1600 rpm and a scan rate of 10 mV s-1. After each designed durability test, ORR polarization curves would be remeasured in the same condition as the initial ones. FIG. 4A show the ORR polarization curves for the supported multimetallic nanoparticles of Example I(a). FIG. 4B show the ORR polarization curves for the supported multimetallic nanoparticles of Example I(b). FIG. 4C show the ORR polarization curves for the supported multimetallic nanoparticles of Example I(c). Based on these curves, it was determined that all three of the supported multimetallic nanoparticles showed potential for good performance is fuel cell reactions.

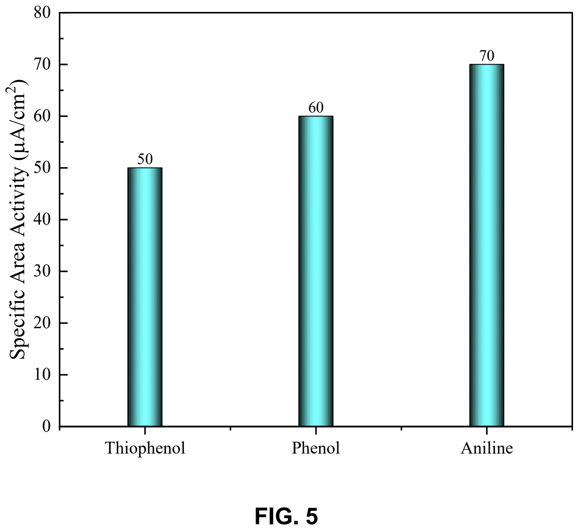

FIG. 5 shows the specific area activity of the multimetallic nanoparticles supported on various modified carbons as described in Examples I(a)-I(c). The activity is calculated via normalizing the kinetic current at 0.9V by the electrochemically active surface area.

## Claims

1. A method for preparing multimetallic particles on a support comprising:
combining two or more metallic precursors in a solvent with a support to form a suspension, wherein the two or more metallic precursors comprise a first metallic precursor and a second metallic precursor, and wherein the support comprises a modified carbon, and
heating the suspension to provide supported multimetallic particles, wherein the supported multimetallic particles comprise multimetallic particles bound to the support.

2. The method of claim 1, wherein the first metallic precursor comprises a first metallic element selected from Pt, Ru, Co, Fe, Ni, Ir, and Ag.

3. The method of claim 1 or 2, wherein the second metallic precursor comprises a second metallic element that is different from the first metallic element, and wherein the second metallic element is selected from Pt, Ru, Co, Fe, Ni, Ir, and Ag.

4. The method of any one of claims 1 to 3, wherein the modified carbon comprises modified carbon black.

5. The method of any one of claims 1 to 4, wherein the modified carbon comprises a phenol.

6. The method of any one of claims 1 to 5, wherein the modified carbon comprises a thiophenol.

7. The method of any one of claims 1 to 6, wherein the modified carbon comprises an aniline.

8. The method of any one of claims 1 to 7, wherein the supported multimetallic particles have a mass ratio of metallic elements to carbon of at least about 1:1.

9. The method of any one of claims 1 to 8, wherein the supported multimetallic particles have a mass ratio of metallic elements to carbon of between about 1:1 and 60:1.

10. The method of any one of claims 1 to 9, wherein the suspension is heated to a temperature of between about 100 and 260 °C.

11. The method of any one of claims 1 to 10, wherein the heating is performed without microwave heating or ultrasonic heating.

12. The method of any one of claims 1 to 11, wherein the solvent comprises a glycol.

13. The method of any one of claims 1 to 12, wherein the multimetallic particles comprise an alloyed crystalline phase.

14. The method of any one of claims 1 to 13, wherein the multimetallic particles comprise a high entropy alloy.

15. A supported multimetallic particle comprising a multimetallic particle bound to a support, wherein the multimetallic particle comprise a first metallic element and a second metallic element, and wherein the support comprises a modified carbon.

16. The supported multimetallic particle of claim 15, wherein the first metallic element is selected from Pt, Ru, Co, Fe, Ni, Ir, and Ag, wherein the second metallic element is different from the first metallic element, and wherein the second metallic element is selected from Pt, Ru, Co, Fe, Ni, Ir, and Ag.

17. The supported multimetallic particle of claim 15 or 16, wherein the supported multimetallic particle has a mass ratio of metallic elements to carbon of at least about 1:1.

18. The supported multimetallic particle of any one of claims 15 to 17, wherein the supported multimetallic particle has a mass ratio of metallic elements to carbon of between about 1:1 and 60:1.

19. The supported multimetallic particle of any one of claims 15 to 18, wherein the multimetallic particle comprises an alloyed crystalline phase.

20. The supported multimetallic particle of any one of claims 15 to 19, wherein the multimetallic particle comprises a high entropy alloy.
